(19) Europäisches Patentamt
European Patent Office
Office européen des brevets

(11) **EP 0 668 004 B1**

(12) **FASCICULE DE BREVET EUROPEEN**

(45) Date de publication et mention
de la délivrance du brevet:
**30.12.1998 Bulletin 1998/53**

(51) Int Cl.⁶: **H04N 7/24**

(21) Numéro de dépôt: **93924662.5**

(22) Date de dépôt: **29.10.1993**

(86) Numéro de dépôt international:
**PCT/FR93/01076**

(87) Numéro de publication internationale:
**WO 94/10800 (11.05.1994 Gazette 1994/11)**

(54) **PROCEDE ET DISPOSITIF DE REDUCTION DE DEBIT POUR L'ENREGISTREMENT D'IMAGES SUR MAGNETOSCOPE**

Verfahren und Vorrichtung zur Ratenreduktion für Bildaufzeichnung

Method and apparatus for rate reduction in image recording

(84) Etats contractants désignés:
**AT CH DE ES FR GB IT LI**

(30) Priorité: **03.11.1992 FR 9213153**

(43) Date de publication de la demande:
**23.08.1995 Bulletin 1995/34**

(73) Titulaire: **THOMSON multimedia**
**92648 Boulogne Cédex (FR)**

(72) Inventeurs:
• **GUILLOTEL, Philippe, Thomson-CSF SCPI**
**F-92402 Courbevoie Cédex (FR)**
• **TOURTIER, Philippe, Thomson-CSF SCPI**
**F-92402 Courbevoie Cédex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
EP-A- 0 364 285     EP-A- 0 442 096
EP-A- 0 475 251     US-A- 5 128 757

• **SIGNAL PROCESSING IMAGE COMMUNICATION vol. 4, no. 1, 1 Novembre 1991, AMSTERDAM, NL pages 65 - 79 XP233565 L. VANDENDORPE 'Optimized Quantization for Image Subband Coding'**
• **SIGNAL PROCESSING IMAGE COMMUNICATION vol. 3, no. 1, 1 Février 1991, AMSTERDAM, NL pages 91 - 105 XP234786 M. E. BLAIN ET AL. 'A Comparison of Vector Quantization Techniques in Transform and Subband Coding of Imagery'**
• **IEICE TRANSACTIONS ON COMMUNICATIONS vol. E75B, no. 5, 1 Mai 1992, TOKYO, JP pages 327 - 338 XP307373 T. SAITO ET AL. 'High-Fidelity Sub-Band Coding for Very High Resolution Images'**

## Description

La présente invention concerne un procédé et un dispositif de réduction de débit pour l'enregistrement d'images sur magnétoscope.

Elle s'applique notamment à l'enregistrement numérique d'image mais également à la transmission et au stockage des images.

Pour les studios de télévision haute définition numérique de l'avenir il paraît essentiel de pouvoir enregistrer le signal de télévision haute définition sous une forme numérique pour préserver la qualité des images au cours des multiples opérations d'enregistrement lecture qui ont lieu lors du montage des bandes d'enregistrement. Les magnétoscopes haute définition analogiques connus utilisent des bobines de bandes magnétiques et ce support d'enregistrement pourrait également être envisagé pour les magnétoscopes numériques. Cependant, pour permettre un usage convenable et fiable, les magnétoscopes à cassettes seraient mieux adaptés. En fait la technologie actuelle parait mal convenir à ces choix car, pour obtenir le débit de données élevé demandé par un tel enregistrement, il faudrait utiliser un nombre de têtes de lecture très important de 8 ou de 16, une bande magnétique et une méthode d'enregistrement beaucoup plus performantes que celles disponibles actuellement. D'autres problèmes liés à l'enregistrement sur cassette sont liés au fait que le temps disponible sur une bande doit dépasser au moins 60 minutes et que l'enregistrement du son doit être effectué sur au moins quatre canaux audio numériques. Pour répondre à ces exigences des solutions numériques à compression de débit binaire du signal peuvent naturellement être envisagées en respectant les principales contraintes liées à l'utilisation d'un magnétoscope numérique. Une première contrainte est qu'il faut disposer d'un débit fixe par trame ou par image afin de permettre le montage image par image et l'accès aléatoire des images sur la bande d'enregistrement. L'accès aléatoire aux images nécessite qu'une image ou une trame commence toujours exactement de façon synchrone avec l'instant de synchronisation enregistré sur la bande sous peine de voir la recherche et le positionnement impossible. Le montage image par image nécessite que l'image remplacée occupe le même espace sur la bande que la nouvelle image et que les images soient bien indépendantes les unes des autres. Suivant une deuxième contrainte, le codage utilisé doit permettre la lecture d'image dans les modes spéciaux tels que le "ralenti", l'"accéléré" et le mode "pas à pas". Dans les modes "ralenti", la reconstruction des images doit être parfaite et dans les modes "accéléré" il faut pouvoir reconnaître les images. Il faut savoir que pour les magnétoscopes à cassettes existant actuellement, dans les modes "ralenti" l'information lue contient peu d'erreurs grâce aux techniques connues sous les vocables anglo-saxons d'"over-scanning" et de "tracking", le ralenti peut s'obtenir par répétition des trames ou par interpolation. Dans les modes "rapide" cependant, du fait de la position des têtes de lecture vis-à-vis de la bande, une partie seulement des informations est lue (le reste est interpolé). De plus pour une même image certaines lignes proviennent de l'image à l'instant t et d'autres de l'image aux instants t+1, t+2, ..., en fonction de la vitesse de lecture. Enfin, suivant une troisième contrainte pour les applications professionnelles il est impératif de garantir une qualité de reconstruction sans dégradation visible de l'image même après une série de codage-décodage.

La plupart des techniques de réduction de débit existantes ont été développées pour des applications de transmission. Elles sont généralement basées sur une décomposition de l'image par transformée cosinus (ou sans-bandes) suivi d'un codage à longueur variable. Le débit moyen est fixe, bien que le débit soit variable d'une image à l'autre. De plus, pour obtenir des taux de compression élevés ces techniques mettent en oeuvre un codage inter-image avec compensation de mouvement de sorte que les images dépendent des images précédentes.

Pour les applications d'enregistrement le principal problème est de garder un débit fixe par image ou zone d'image (par secteur enregistré par exemple) tout en utilisant des techniques adaptatives au contenu de l'image, ces techniques étant les seules qui permettent d'obtenir des résultats satisfaisants. Pour cela il existe deux façons de résoudre le problème, soit en effectuant deux passes, une première passe pour obtenir le coût binaire de l'image qui permet de régler les paramètres pour coder au mieux l'image dans le débit disponible soit avec une pré-analyse de l'image qui permet d'allouer le débit disponible, en fonction du contenu de chaque bloc de l'image. Ces méthodes sont associées aux techniques classiques utilisées en transmission par décomposition en transformée cosinus (ou sous-bandes), quantification et codage à longueur variable ou à des méthodes nouvelles développées pour cette application particulière. Ces méthodes sont par exemple décrites :

- dans l'article de N. ENDOH et al ayant pour titre "Experimental digital VCR with New DCT-Based Bit-Rate Reduction and Channel Coding" publié dans SMPTE Journal de Juillet 1992, aux pages 475 à 480
- dans l'article de P. KAUFF et al ayant pour titre "A DCT Coding Scheme for Digital HDTV Recording" publié au 4ème International Workshop sur la Télévision Haute Définition qui a eu lieu à Turin en Italie en 1991
- dans l'article de T. KONDO et al ayant pour titre "Adaptative Dynamic Range Coding Scheme for Future HDTV Digital VTR" publié au 4ème International Workshop sur la Télévision Haute Définition à Turin en Italie en 1991
- dans l'article de K. ONISHI et al ayant pour titre "An Experimental Home-Use Digital VCR with Three Dimensional DCT and Superimposed Error Correction Coding" publié dans IEEE Transactions on Consumer Electronics, Vol. 37, No. 3, August 1991

- dans l'article de J.MAX ayant pour titre "Quantizing for Minimum Distorsion" publié dans la revue IRE Transaction Inform Theory, Vol. IT-6, 7-12, janvier 1960
- dans l'article de P. NOLL et R. ZELINSKI ayant pour titre "Comments on : Quantizing Characteristics for Signals Having Laplacian Amplitude Probability Density Function" publié dans l'article IEEE Transactions on Communications, Vol. COM-27, No. 8, August 1979.

Dans l'article de N. ENDOH la technique de codage est dite intra-image (c'est-à-dire indépendante d'une image à l'autre) avec une décomposition de l'image en transformée cosinus, une quantification, puis un codage à longueur variable, le débit fixe est obtenu par pré-analysé de l'image. Celle-ci consiste en un calcul d'énergie par bloc qui permet d'allouer le débit localement en fonction de la difficulté de codage des blocs, et en un calcul de l'énergie globale de l'image qui permet d'allouer le débit total disponible pour coder l'image. Cependant cette technique qui a été développée pour un autre formatage des données que celui utilisé dans les magnétoscopes actuels ne peut pas résoudre a priori le problème des modes "accéléré".

Dans l'article de P. KAUFF la méthode utilisée est basée sur le même principe que précédemment avec une pré-analyse mais avec aussi une technique qui permet de résoudre en partie le problème des modes "accéléré", les coefficients de la transformée cosinus les plus importants n'étant pas codés avec des codes à longueurs variables mais insérés régulièrement sur la bande et sur un nombre fixe de bits. De plus, un choix entre les modes intra-trames ou intra-images est effectué. Mais certains problèmes restent non résolus en ce qui concerne notamment les solutions qu'il faut accessoirement prendre lorsque le débit est dépassé. D'autre part, le résultat obtenu en terme de qualité d'image en mode "accéléré" paraît incertain. De plus cette méthode impose de développer un nouveau magnétoscope tenant compte du fait que le formatage des données sur la bande est modifié.

Dans l'article de T. KONDO la méthode utilisée est différente car pour obtenir un débit fixe par période d'images c'est-à-dire sur deux images, la technique n'utilise pas de codage à longueurs variables dont le coût binaire est très difficile à prévoir. La technique mise en oeuvre consiste à découper l'image en blocs à 3 dimensions, avec 6 lignes et 6 pixels pour les deux images consécutives, puis à calculer la dynamique à l'intérieur de chaque bloc par une pré-analyse afin d'allouer localement le débit nécessaire à chaque bloc. La somme des dynamiques sur l'image permet alors d'allouer le débit total disponible à toute l'image. Avec cette méthode le débit est fixe pour 2 images. Cependant elle ne permet pas les modes rapides et le montage est limité à des ensembles de deux images par deux images. Les résultats obtenus paraissent donc insuffisants pour la réalisation d'un magnétoscope professionnel.

Dans l'article de K. ONISHI une transformée cosinus à trois dimensions portant sur quatre images, suivie d'une décomposition en quatre bandes de fréquences sont mises en oeuvre. Une première passe détermine le coût de chaque bloc et suivant le débit disponible la quantification est adaptée. Mais l'article n'offre pas de solution pour les modes accélérés et le montage est limité à quatre images. Egalement le rapport signal à bruit est insuffisant pour permettre une réalisation de magnétoscopes professionnels.

Le document SIGNAL PROCESSING IMAGE COMMUNICATION vol. 4, no. 1, 1 Novembre 1991, AMSTERDAM, NL pages 65 - 79, XP 000233565, L. VANDENDORPE: "Optimized Quantization for Image Subband Coding", décrit le principe général d'une quantification optimisée pour le codage d'un signal divisé en sous-bandes et représentatif d'une image. La quantification est optimisée dans chaque sous-bande en ce qu'une transformation matricielle directe équivalente à une analyse dans le codeur de sous-bande est effectuée, et en ce que les coefficients de pondération utilisés dans chaque sous-bande sont choisis de façon à minimiser le bruit moyen pondéré, le calcul du bruit pondéré étant effectué pour chaque sous-bande.

Le document EP - A - 0 442 096 décrit un dispositif de codage de signaux vidéo à répartition en sous-bandes, le signal étant divisé en une sous-bande de basse fréquence et une ou plusieurs sous-bandes de hautes fréquences. Dans chacune des différentes sous-bandes, une quantification adaptive non-linéaire est effectuée sur les signaux de hautes fréquences de ladite sous-bande. Dans un exemple de réalisation, les coefficients de quantification dans la/ les sous-bande(s) de hautes fréquences peuvent être choisis en fonction de la détection d'une structure horizontale, verticale ou diagonale.

Le but de l'invention est de palier les inconvénients précités.

A cet effet l'invention a pour objet un procédé de réduction du débit pour l'enregistrement d'images sur magnétoscope numérique tel que décrit dans la revendication 1.

L'invention a également pour objet un dispositif pour la mise en oeuvre du procédé précité, tel que décrit dans la revendication 6.

Elle a pour principal avantage qu'elle permet de satisfaire aux exigences des magnétoscopes numériques professionnels à la fois par la qualité des images obtenues, les modes spéciaux, la multigénération des images, et les facilités de montage qu'elle permet.

D'autre part, elle permet d'obtenir une image sous-échantillonnée ou "sous-image" codée sur un nombre réduit de bits dans la bande de base pour chacune des composantes de luminance et de chrominance permettant un fonctionnement des magnétoscopes numériques en modes rapides et assurant une compatibilité avec les magnétoscopes existants. La taille de chaque "sous-image" peut être choisie en fonction d'un compromis entre la qualité d'image et le débit disponible. Chaque sous-image est obtenue simplement en prenant uniquement la bande de base d'une décomposition sous-bande (par transformation cosinus par exemple), ou plusieurs sous-bandes recomposées ou encore une image source sous-échantillonnée. Grâce à la représentation de l'image par bandes fréquentielles celle-ci peut alors être facilement transmise ou soustraite de l'image à coder en supprimant par exemple les bandes hautes fréquences en cas de dépassement de débit disponible. Grâce à l'usage de quantificateurs non-linéaires leur nombre peut être limité à 6 par exemple pour les quantificateurs non-linéaires, en conservant un quantificateur linéaire pour coder les basses fréquences.

Enfin elle permet de conserver un format de données tout à fait compatible avec le format 4/2/2 des magnétoscopes existants, les données étant toutefois codées sur des mots dont la longueur est connue grâce à des données auxiliaires exprimant la variance de l'erreur de quantification de chaque composante de luminance et de chrominance.

Un enregistrement des données auxiliaires permet ensuite de décoder les mots de données avec une longueur connue grâce à ces données auxiliaires.

D'autres caractéristiques et avantages de l'invention apparaîtront ci-après à l'aide de la description qui va suivre faite en regard des dessins annexés qui représentent :

-   les figures 1b et 1b les différentes étapes du procédé selon l'invention sous la forme d'un organigramme ;
-   les figures 2a à 2d des exemples de décomposition de l'image en sous-bandes dans un espace de Fourier ;
-   la figure 3 un dispositif pour la mise en oeuvre du procédé selon l'invention.

Les principales caractéristiques mises en oeuvre par la technique de codage selon l'invention consistent à effectuer un codage intra-image sur des images sources entrelacées ou progressives pour décomposer ensuite l'image en sous-bandes (soit par filtrage sous-bande, soit par transformée cosinus sur la base de blocs de 8x8 pixels par exemple), à effectuer une pré-analyse de l'image par bloc de façon à allouer un débit adaptatif à chaque pixel de l'image décomposée pour chaque composante de luminance et de chrominance. Une quantification linéaire est effectuée sur la bande de base (bande basse fréquence) de l'image et une quantification non linéaire est effectuée sur les autres. Cela permet d'effectuer un codage sur 8 bits de la bande de base pour chacune des composantes de luminance et de chrominance et d'obtenir ainsi une image sous-échantillonnée appelée ci-après "sous-image".

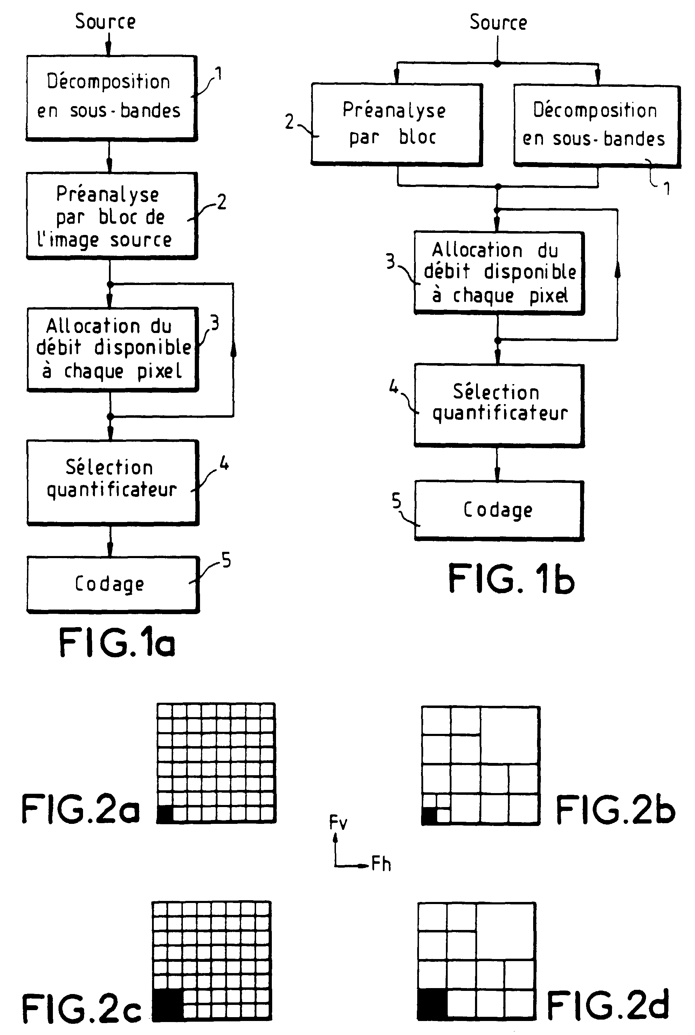

Le procédé consiste selon les étapes représentées sur les organigrammes des figures 1a et 1b à effectuer selon une première étape 1 une décomposition de l'image en sous-bandes, à effectuer à l'étape 2 une pré-analyse de l'image par blocs d'un nombre déterminé de pixels par exemple de 8x8, à allouer à chaque pixel selon l'étape 3 le débit disponible de manière récursive en fonction de l'énergie contenue dans chacun des blocs de 8x8 pixels et dans chaque bande, pour effectuer à l'étape 4 une sélection d'un quantificateur et un codage approprié de chaque composante à l'étape 5.

La décomposition de l'image en sous-bandes qui est effectuée à l'étape 1 a lieu de manière analogue à celle décrite par exemple dans les demandes de brevets français N° FR-A-2 654 887 ou FR-A-2 661 062 déposées au nom de la Demanderesse, soit par décomposition avec un arbre complet figure 2a de 64 sous-bandes ou soit par une décomposition hiérarchique avec un arbre à 16 sous-bandes comme représenté à la figure 2b qui font apparaître les différents niveaux de résolution dans le domaine des fréquences spatiales verticales et horizontales mesurées en cycle par largeur et par hauteur d'image. Du fait de cette décomposition les données enregistrées ne sont pas corrélées les unes aux autres, sauf dans la bande de base, les données interpolées dans les modes accélérés (connue dans les magnétoscopes numériques actuels) deviennent incohérentes et le décodage des images présente de ce fait une qualité médiocre. Pour résoudre ce problème, les sous-bandes les plus importantes sont codées avec un débit fixe quel que soit l'image. Un compromis qualité-débit acceptable est obtenu en attribuant un débit fixe pour les quatre sous-bandes comprenant la bande de base. Le résultat est cependant amélioré grâce à une décomposition de l'image en sous-bandes à l'aide d'un arbre complet sauf pour la bande de base qui est décomposée d'un niveau de moins que les autres, comme le montre l'arbre à 61 sous-bandes de la figure 2c avec sa version hiérarchique à 13 sous-bandes représentée à la figure 2d. Cette disposition permet de quantifier la bande de base (4 fois plus grande) avec un quantificateur linéaire de pas fixe fournissant une image codée sur 8 bits conforme aux données habituellement enregistrées sur les magnétoscopes numériques.

La pré-analyse de l'image par bloc consiste à calculer une fonction de l'énergie de chaque bloc d'un nombre déterminé de pixels de 8x8 par exemple, en faisant un calcul de variance de chaque sous-bande autre que la bande de base (figure 1a). Le but consiste à déterminer les blocs de 8x8 pixels par exemple de l'image pour lesquels le codage apparaît plus compliqué que les autres, ceux-ci étant représentés par les blocs de l'image rayonnant les hautes fréquences. Ce calcul est réalisé sur chaque composante de luminance ou de chrominance. A chaque pixel d'une sous-bande le calcul fait correspondre un bloc de 8x8 pixels dans l'image source. Pour chaque bloc de 8x8 pixels l'écart entre la valeur du pixel après décomposition en sous-bande et la variance de la sous-bande considérée est calculée. Le résultat pris en compte est égal à la somme des résultats obtenus dans chacune des sous-bandes.

Ce calcul est résumé par la formule empirique suivante :

$$\forall i \,/\, \left|F_p(k,i,n)\right| \geq \sqrt{var(i,n):cod(k,n)} = \frac{\alpha}{N}\sum_{i=1}^{N}\left(\left|F_p(k,i,n)\right| - \sqrt{var(i,n)}\right) \quad (1)$$

avec i # bdb et $1 \leq cod\,(k,n) \leq 4$
où i est un indice qui représente le numéro de la sous-bande,
n représente une composante de luminance ou de chrominance (y, $C_R$, $C_b$)
k est le numéro de chaque bloc de 8x8 pixels considéré
bdb est le numéro de la bande de base
N est le nombre de sous-bandes utilisées (61 par exemple)
fp(k,i,n) représente la valeur du pixel appartenant au bloc k de la sous-bande i pour la composante n.
var(i,n) représente la variance de la sous-bande i pour la composante n
cod(k,n) est un coefficient de pondération du bloc k de composante n
et $\alpha$ est un coefficient qui dépend des composantes de luminance ou de chrominance ($\alpha$ vaut 1 pour la luminance et 2 pour chacune des 2 composantes de chrominance).

Le coefficient de pondération "cod(k,n)" intervient pour l'allocation adaptative du débit disponible à chaque pixel de l'image décomposée.

Cependant la pré-analyse de l'image qui vient d'être décrite n'est pas unique et peut par exemple être remplacée par une technique plus classique basée sur un calcul de l'énergie par blocs de 8x8 pixels de l'image source (figure 1b). L'intérêt est alors que le calcul peut s'effectuer en parallèle avec la décomposition en sous-bandes ce qui n'introduit pas de retard d'image supplémentaire. La méthode consiste à calculer les variances des différents blocs de 8x8 pixels de l'image source pour donner une valeur de variance locale puis à calculer la variance des résultats ou variance globale. Ceci permet d'obtenir le coefficient de pondération en utilisant par exemple le logarithme du rapport des variances locale et globale. Dans ce cas les valeurs autorisées sont de 1/2, 1 et 2 au lieu d'être 1, 2, 3 ou 4 comme précédemment. Cependant les résultats obtenus bien que comparables apparaissent meilleurs avec la technique précédente.

L'allocation du débit disponible à chaque sous-bande autre que la bande de base est effectuée en codant mieux les bandes basses fréquences que les bandes hautes fréquences. A l'intérieur de chaque sous-bande, chaque pixel correspondant à un bloc de 8x8 pixels est pondéré par le coefficient "cod" déterminé précédemment lors de l'étape de pré-analyse 2. Le problème consiste à déterminer pour chaque pixel le nombre de niveaux de représentation du quantificateur pour rendre minimum l'erreur totale de quantification tout en se contraignant à un débit global fixé par l'image. Ce calcul suppose que les bandes de fréquence exceptée la bande basse fréquence suivent des distributions laplaciennes. Il utilise pour cela un code à longueur fixe et des quantificateurs non linéaires comme ceux décrits dans l'article intitulé "Quantizing for Minimum Distorsion" et publié dans la revue IRE Trans. Inform. Theory, vol. IT-6, 7-12 de janvier 1960 ayant pour auteur J. MAX. En suivant cette méthode, la bande basse fréquence est toujours codée sur 8 bits par pixel avec un quantificateur linéaire de pas fixé. La détermination du nombre de niveaux des quantificateurs met en oeuvre la méthode des multiplicateurs de Lagrange.

L'application de cette méthode permet d'attribuer un débit pour chaque pixel en considérant la variance de l'erreur de quantification totale relativement à la variance de l'erreur de quantification de chaque composante n de luminance ou de chrominance dans chacune des bandes i autre que la bande de base.

Pour un quantificateur de MAX, la variance V de l'erreur de quantification totale est donnée par :

$$V = \sum_{i}\sum_{n} V(i,n) \quad\quad (2)$$

avec

$$V(i,n) = \varepsilon^2 . 2^{-2b(i,n)} . Var(i,n) \quad\quad (3)$$

où : V(i,n) désigne la variance de l'erreur de quantification de la bande i pour la composante n

- $\varepsilon^2$ est une constante égale à 4,5 par exemple
- b(i,n) est le débit de la bande i pour la composante n
- Var(i,n) est la variance de la bande i de composante n.

En considérant non plus un débit constant mais variable dans une bande la formule précédente se généralise et devient :

$$V(k,i,n) = \varepsilon^2 . 2^{-2.b(k,i,n)} . Var(k,i,n) \tag{4}$$

dans laquelle :

V(k,i,n) est la variance de l'erreur de quantification pour un pixel k de la bande i pour la composante n.
b(k,i,n) est le débit du pixel considéré
et Var(k,i,n) est une fonction de la variance de la bande pour le pixel considéré.

Pour des sous-bandes de taille identique (64 dans l'exemple figure 2a ou 60 pour la figure 2c) à chaque pixel k d'une bande i, correspond un bloc d'image source (de taille 8x8 pixels correspondant à 3 niveaux de décomposition, pour les exemples des figures 2a et 2c).
Dans ce cas :

$$Var(k,i,n) = \frac{Var(i, n)}{N_k} . cod^2 (k, n) \tag{5}$$

où :

- $N_k$ est égal au nombre de pixels par bande
- cod(k,n) est le coefficient de pondération défini précédemment du pixel k de composante n.

Pour rendre minimale l'erreur V(k,i,n) avec la contrainte d'un débit B fixe par image en utilisant la méthode connue des multiplieurs de Lagrange, l'opération revient à résoudre l'équation aux dérivées partielles :

$$\frac{\partial V}{\partial b(k, i, n)} + \lambda \frac{\partial B}{\partial b(k, i, n)} = 0 \tag{6}$$

où $\lambda \in R$
Comme

$$B = \sum_k \sum_i \sum_b b(k, i, n),$$

la relation (6) se simplifie et devient

$$\frac{\partial V}{\partial b(k, i, n)} = -\lambda \tag{7}$$

En tenant compte de la relation (4) la relation (7) s'écrit encore :

$$-\lambda = \varepsilon^2 (-2.\ln 2).2^{-2b(k,\lambda,n)} . \frac{Var(i, n)}{N_k} . cod^2(k, n) \tag{8}$$

Ceci permet d'obtenir le débit binaire pour un pixel dans chaque sous-bande par la relation

$$b(k, i, n) = \frac{1}{2} \log_2\left(\frac{2.\varepsilon^2.\ln 2.\text{Var}(i,n).\text{cod}^2(k,n)}{\lambda.N_k}\right) \qquad (9)$$

En imposant à B un débit maximal par image tel que

$$B = \sum_k \sum_i \sum_n b(k, i, n) = D_{max} \qquad (10)$$

où

$$\sum_k \sum_i \sum_n$$

correspond au nombre $N_T$ de points à traiter par image et en reportant l'expression (9) dans l'expression (10) la constante $\lambda$ apparaît entièrement définie par la relation

$$\lambda = 2^{\left\{\frac{\sum_k \sum_i \sum_n \frac{1}{2}.\log_2\left(\left(2.\varepsilon^2.\ln 2.\text{var}(i,n).\text{cod}^2(k,n)\right)N_k^1\right) - D_{max}}{N_T}\right\}}$$

Dans le cas d'un processus de calcul récursif $\lambda$ est déterminé à chaque sous-bande pour chaque composante de façon à obtenir le débit maximal souhaité :

- Si deb-nec désigne le débit nécessaire à l'instant courant pour coder le reste des sous-bandes soit

$$\sum_k \sum_i \sum_n b(k, i, n)$$

avec $\lambda = 1$ et
- i,n variant de la sous-bande courante à la dernière sous-bande
- deb-aut désigne le débit disponible restant à l'instant courant (soit $D_{max}$ moins le débit utilisé pour les sous-bandes déjà traitées) la relation (11) devient

$$\lambda = 2^{\frac{2(\text{deb-nec - deb-ant})}{N_p}}$$

$N_p$ : Nombre de pixels restant à traiter à l'instant courant.

Les différentes approximations effectuées au cours du traitement peuvent induire un dépassement du débit, dans ce cas les pixels correspondants aux bandes des plus hautes fréquences vers les plus basses ne sont pas transmis jusqu'à ce que le débit max soit obtenu.

La méthode de quantification de J. MAX citée précédemment suppose que soit connu la densité de probabilité de la source. Celle-ci a pour but de rendre minimale la variance de l'erreur en s'étant fixé un nombre de niveaux de représentation. Le nombre des niveaux de représentation du quantificateur de J. MAX est donné par la relation

$$\text{Nb\_rep}(k,i,n) = 2^{b(k,i,n)} - 1$$

et la densité de probabilité de la source est supposée suivre une distribution Laplacienne.

Un quantificateur de MAX à 2N + 1 niveaux de représentation est entièrement définie par les données de suites $X_1$ à $X_N$ et $Y_1$ à $Y_N$ correspondant respectivement aux intervalles de décision et aux valeurs de représentation des $N_b$-rep(k,i,n) niveaux.

Pour déterminer les suites Xi et Yi deux méthodes peuvent être suivies. La première est itérative et est connue sous le nom de méthode de Lloyd. La deuxième calcule une suite récurrente à partir de laquelle sont déterminés des intervalles de décision et des intervalles de reconstruction. La deuxième méthode qui est décrite par exemple dans l'article de P. NOLL et R. ZELINSKI ayant pour titre "Comments on : Quantizing Characteristics for Signals Having Laplacian Amplitude Probability Density Function" paru dans la revue IEEE Transactions on Communications, Vol. COM-27, No. 8, d'août 1979 est plus simple à mettre en oeuvre car les Xi et Yi sont donnés par des relations de la forme

$$x_i = a_{N+1-i} + 2. \sum_{j=N+2-i}^{N} a_j$$

$$y_i = 2. \sum_{j=N+1-i}^{N} a_j$$

La suite (ai) est définie dans le cas d'une distribution Laplacienne de variance unité. Dans ces conditions, les signaux en entrée des quantificateurs peuvent être normalisés en utilisant les variances et les coefficients "cod"de la pré-analyse. Le nombre de bits est limité entre 3 et 8 cela permet de n'utiliser que six quantificateurs non linéaires différents pour toutes les images.

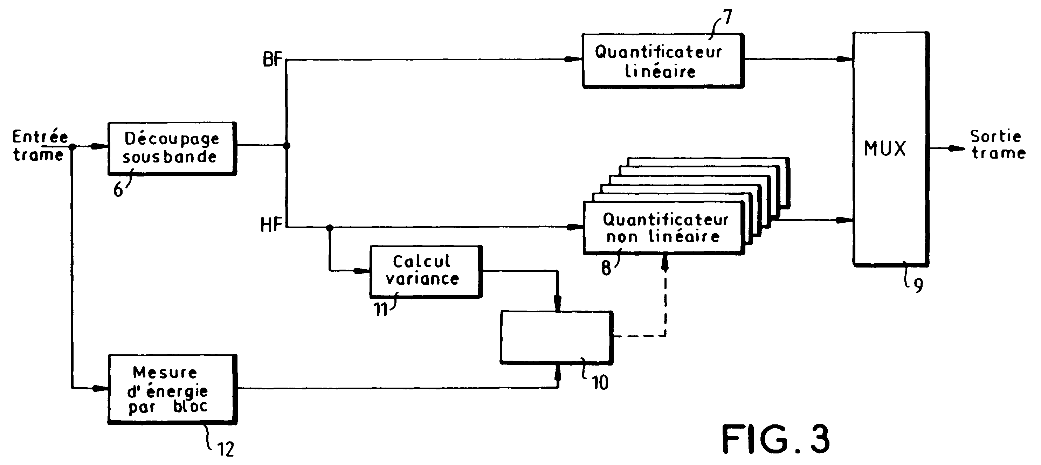

Un dispositif pour la mise en oeuvre du procédé précité est représenté figure 3. Celui-ci comporte un dispositif de découpage de l'image en sous-bandes 6 couplé pour les basses fréquences à un quantificateur linéaire 7 et pour les hautes fréquences à un des 6 quantificateurs non linéaires 8. Un multiplexeur 9 assure la sélection entre les signaux fournis par le quantificateur linéaire 7 et ceux fournis par les quantificateurs non linéaires 8. La sélection d'un quantificateur 8 est assurée par un dispositif de calcul 10 du nombre de niveaux de sortie des quantificateurs. Celui-ci est commandé par la sortie d'un dispositif de calcul de la variance de sous-bande 11 et par un dispositif de mesures de l'activité de blocs 12. Naturellement ces dispositifs peuvent dans leur ensemble être réalisés au moyen de microprocesseur convenablement programmé selon le procédé de l'invention précédemment décrit.

## Revendications

1. Procédé de réduction du débit pour l'enregistrement d'images sur magnétoscope numérique consistant à décomposer l'image source en sous-bandes (1), caractérisé en ce qu'il consiste également :

   - à effectuer une pré-analyse de l'image par blocs d'image (2),
   - à allouer de manière récursive et adaptative (3) le débit disponible à chaque pixel de l'image décomposée, en fonction d'un paramètre spatial de l'image calculé lors de la préanalyse et d'un paramètre fréquentiel,
   - à sélectionner un quantificateur (4) déterminé par la densité de probabilité de la source et un calcul de variance minimum de l'erreur de quantification

   et à coder (5) en fonction du quantificateur sélectionné chaque pixel de chaque composante du signal dans chaque sous-bande.

2. Procédé selon la revendication 1, caractérisé en ce que la pré-analyse de l'image par blocs consiste à calculer un coefficient de pondération cod(k,n) en tenant compte de l'écart dans chaque sous-bande entre les valeurs $F_p$ (k,i,n) de chaque pixel d'un bloc avec la variance Var(i,n) de la sous-bande suivant la relation

$$cod(k,n) = \frac{\alpha}{N} \sum_{i=1}^{N} \left( \left| F_p(k,i,n) \right| - \sqrt{Var(i,n)} \right)$$

où i est le numéro de la sous-bande, n représente une composante de luminance ou de chrominance, k désigne un numéro de bloc, N est le nombre de sous-bandes utilisées, $F_p(k,i,n)$ représente la valeur du pixel appartenant au bloc k de la sous-bande i pour la composante n, Var(i,n) est la variance de la sous-bande i pour la composante n, cod(k,n) est un coefficient de pondération du bloc k de composante n et $\alpha$ est un coefficient dépendant des composantes de luminance et de chrominance.

3. Procédé selon la revendication 2, caractérisé en ce qu'il consiste à allouer le débit disponible à chaque pixel de chaque sous-bande en codant mieux les bandes basses fréquences que les bandes hautes fréquences, chaque bloc d'image étant pondéré par le coefficient de pondération cod(k,n), et chaque pixel étant alors codé sur b(k,i,n) bits.

4. Procédé selon la revendication 3, caractérisé en ce que le débit disponible b(k,i,n) pour chaque pixel de chaque sous-bande est défini à partir de la variance de chaque composante n d'une bande i pondérée par le carré du coefficient d'allocation adaptative cod(k,n) et divisé par le nombre de pixel $N_k$ par bande, pondérée par un coefficient $\lambda$ déterminé à partir de la méthode des multiplieurs de Lagrange pour rendre minimum la variance de l'erreur de quantification dans chaque sous-bande.

5. Procédé selon l'une quelconque des revendications 1 à 4, caractérisé en ce qu'il consiste à utiliser pour l'enregistrement une image sous-échantillonnée à partir de l'image source ou d'une image issue de la décomposition en sous-bandes (1) pour assurer une compatibilité de traitement avec les magnétoscopes numériques existants.

6. Dispositif pour la mise en oeuvre du procédé selon l'une quelconque des revendications 1 à 5, comprenant un dispositif de découpage de l'image en sous-bandes (6), caractérisé en ce que le dispositif de découpage de l'image est couplé pour les basses fréquences à un quantificateur linéaire (7) et pour les hautes fréquences à une pluralité de quantificateurs non linéaires (8), et en ce que le dispositif comprend en outre un multiplexeur (9) assurant la sélection entre les signaux fournis par le quantificateur linéaire (7) et ceux fournis par les quantificateurs non linéaires (8) couplé à un dispositif de calcul (10) du nombre de niveaux de sortie des quantificateurs, le dispositif de calcul (10) assurant la sélection d'un quantificateur non linéaire (8) et étant commandé par un dispositif de calcul de variance de sous-bande (11) et un dispositif de mesure d'énergie par bloc (12).

## Patentansprüche

1. Verfahren zur Verringerung der Bit-Rate für die Aufzeichnung von Bildern mit einem digitalen Videorecorder mit einer Zerlegung des Quellenbildes in Unter-Bänder (1), <u>gekennzeichnet durch</u> die folgenden Schritte:

   - Durchführung einer Voranalyse des Bildes durch Bildblöcke (2),
   - Zuordnen der bei jedem Pixel des zerlegten Bildes verfügbaren Bit-Rate in einer rekursiven und adaptiven Weise (3) in Abhängigkeit von einem Raumparameter des aus der Voranalyse berechneten Bildes und einem Frequenzparameter,
   - Auswählen eines Quantisierers (4), der durch die Wahrscheinlichkeitsdichte der Quelle und eine Berechnung der minimalen Varianz des Quantisierungsfehlers bestimmt ist,
   - und Kodieren (5) jedes Pixels jeder Signalkomponente in jedem Unter-Band in Abhängigkeit von dem ausgewählten Quantisierer.

2. Verfahren nach Anspruch 1,
   <u>dadurch gekennzeichnet,</u> daß die Voranalyse des Bildes durch Blöcke in einer Berechnung eines Wichtungs-Koeffizienten cod(k,n) besteht, unter Berücksichtigung der Abweichung in jedem Unter-Band zwischen den Werten $F_p(k,i,n)$ jedes Pixels eines Blocks und der Varianz Var(i,n) des Unter-Bandes entsprechend der Beziehung

$$\mathrm{cod}(k,n) = \frac{\alpha}{N} \sum_{i=1}^{N} \left( |F_p(k,i,n)| - \sqrt{\mathrm{Var}(i,n)} \right)$$

wobei i die Nummer des Unter-Bandes ist, n eine Luminanzkomponente oder eine Chrominanzkomponente darstellt, k eine Nummer des Blocks bezeichnet, N die Zahl der angewendeten Unter-Bänder ist, $F_p(k,i,n)$ den Wert des Pixels darstellt, das zu dem Block k des Unter-Bandes i für die Komponente n gehört, Var(i,n) die Varianz des Unter-Bandes i für die Komponente n ist, cod(k,n) ein Wichtungs-Koeffizient des Blocks k der Komponente n ist und $\alpha$ ein Koeffizient ist, der von der Luminanzkomponente und der Chrominanzkomponente abhängt.

**3.** Verfahren nach Anspruch 2,
dadurch gekennzeichnet, daß die verfügbare Bit-Rate jedem Pixel jedes Unter-Bandes zugeordnet ist, indem die Bänder mit niedrigen Frequenzen in einem höheren Grad kodiert werden als die Bänder mit hohen Frequenzen, wobei jeder Bildblock durch den Wichtungs-Koeffizienten cod(k,n) gewichtet und dann jedes Pixel auf d(k,i,n) Bit kodiert wird.

**4.** Verfahren nach Anspruch 3,
dadurch gekennzeichnet, daß die für jedes Pixel jedes Unter-Bandes verfügbare Bit-Rate b(k,i,n) aus der Varianz jeder Komponente eines Bandes i bestimmt wird, die durch das Quadrat des Koeffizienten der adaptiven Zuordnung cod(k,n) gewichtet und durch die Zahl der Pixel $N_k$ je Band dividiert ist, gewichtet mit einem Koeffizienten a, der aus dem Multiplizierverfahren von Lagrange bestimmt ist, um die Varianz des Quantisierungsfehlers in jedem Unter-Band minimal auszuwählen.

**5.** Verfahren nach einem der Ansprüche 1 bis 4,
dadurch gekennzeichnet, daß für die Aufzeichnung ein Bild verwendet wird, das aus dem Quellenbild oder einem aus der Zerlegung in Unter-Bilder gewonnenen Bild unterabgetastet wird, um eine Kompatibilität in der Verarbeitung mit den bestehenden digitalen Videorecordern zu gewährleisten.

**6.** Vorrichtung zur Durchführung des Verfahrens nach einem der Ansprüche 1 bis 5 mit einer Vorrichtung zur Zerlegung des Bildes in Unter-Bänder (6), dadurch gekennzeichnet, daß die Vorrichtung zum Zerlegen des Bildes für die niedrigen Frequenzen mit einem linearen Quantisierer (7) und für die hohen Frequenzen mit einer Vielzahl von nicht linearen Quantisierern (8) verbunden ist, und daß die Vorrichtung außerdem einen Multiplexer (9) enthält, der die Auswahl zwischen den durch den linearen Quantisierer (7) gelieferten Signalen und den Signalen sicherstellt, die durch die nicht linearen Quantisierer (8) geliefert werden, der mit einer Berechnungseinheit (10) der Stufenzahl im Ausgangssignal der Quantisierer verbunden ist, wobei die Berechnungseinheit (10) die Auswahl eines nicht linearen Quantisierers (8) gewährleistet, der von einer Vorrichtung zum Berechnen der Varianz des Unter-Bandes (11) und einer Vorrichtung zum Messen der Energie je Block (12) gesteuert wird.

**Claims**

**1.** Process of bit-rate reduction for recording images on a digital video recorder consisting in splitting the source image into sub-bands (1), characterized in that it also consists

- in performing a pre-analysis of the image in image blocks (2),
- in recursively and adaptively allocating (3) the available bit-rate to each pixel of the split image, as a function of a spatial parameter of the image, calculated during the pre-analysis, and of a frequency parameter,
- in selecting a quantizer (4) determined by the probability density of the source and a calculation of minimum variance of the quantization error

and in coding (5) as a function of the selected quantizer each pixel of each component of the signal in each sub-band.

**2.** Process according to Claim 1, characterized in that the block-wisepreanalysis of the image consists in calculating a weighting coefficient cod(k,n) taking into account the deviation in each sub-band between the values $F_p(k,i,n)$ of each pixel of a block and the variance Var(i,n) of the sub-band according to the relation

$$\text{cod}(k, n) = \frac{\alpha}{N} \sum_{i=1}^{N} \left( |F_p(k, i, n)| - \sqrt{\text{Var}(i, n)} \right)$$

where i is the number of the sub-band, n represents a luminance or chrominance component, k designates a block number, N is the number of sub-bands used, $F_p(k,i,n)$ represents the value of the pixel belonging to block k of sub-band i for component n, Var(i,n) is the variance of sub-band i for component n, cod(k,n) is a weighting coefficient for block k of component n and $\alpha$ is a coefficient dependent on the luminance and chrominance components.

3. Process according to Claim 2, characterized in that it consists in allocating the available bit rate to each pixel of each sub-band by coding the low frequency bands better than the high frequency bands, each image block being weighted by the weighting coefficient cod(k,n), and each pixel then being coded on b(k,i,n) bits.

4. Process according to Claim 3, characterized in that the available bit rate b,(k,i,n) for each pixel of each sub-band is defined from the variance of each component n of a band i weighted by the square of the adaptive allocation coefficient cod(k,n) and divided by the number of pixels $N_k$ per band, weighted by a coefficient $\lambda$ determined by the method of Lagrange multipliers so as to minimize the variance of the quantization error in each sub-band.

5. Process according to any one of Claims 1 to 4, characterized in that it consists in using, for the recording, an image sub-sampled from the source image or from an image arising from the sub-band splitting (1) so as to ensure compatibility of processing with existing digital video recorders.

6. Device for implementing the process according to any one of Claims 1 to 5, comprising a device for splitting the image into sub-bands (6), characterized in that the device for splitting the image is coupled in respect of the low frequencies to a linear quantizer (7) and in respect of the high frequencies to a plurality of nonlinear quantizers (8), and in that the device furthermore comprises a multiplexer (9) providing for the selecting between the signals delivered by the linear quantizer (7) and those delivered by the nonlinear quantizers (8) and coupled to a device (10) for calculating the number of output levels of the quantizers, the calculating device (10) providing for the selecting of a nonlinear quantizer (8) and being controlled by a sub-band variance calculating device (11) and a block-wise energy measurement device (12).

Source

Décomposition
en sous-bandes _1

↓

Préanalyse
par bloc de
l'image source _2

↓

Allocation du
débit disponible
à chaque pixel _3

↓

Sélection
quantificateur _4

↓

Codage _5

## FIG.1a

Source

Préanalyse
par bloc _2     Décomposition
en sous-bandes _1

↓

Allocation du
débit disponible
à chaque pixel _3

↓

Sélection
quantificateur _4

↓

Codage _5

## FIG. 1b

FIG.2a

FIG.2b

Fv
└→ Fh

FIG.2c

FIG.2d

FIG. 3